# EUROPEAN PATENT APPLICATION

(11) **EP 4 120 210 A1**
(43) Date of publication of application: **18.01.2023**
(21) Application number: 21186174.5
(22) Date of filing: 16.07.2021
(51) Int. Cl.: G07C 9/00, G06Q 10/08, G08B 25/00

(54) **METHOD AND SYSTEM FOR DELIVERING ITEMS**

(71) Applicant: Sendmee Technologies AB, 184 94 Åkersberga (SE)
(72) Inventor: WIKSTRÖM, Mats, 184 94 Åkersberga (SE); FRENDEGARD, Daniel, 184 94 Åkersberga (SE)
(74) Representative: AWA Sweden AB

(57) **Abstract**

The present invention relates to a method for enabling delivery in an alarm secured area. The method comprises: sending an order request from a user device to a vendor server, the order request comprising user identification information; sending an order confirmation comprising the user identification information to a central server; identifying at least one smart lock communicatively connected with a smart lock server based on the user identification information; generating an authentication code based on the user identification information; sending a delivery request comprising an order identification code to an external device; providing the order identification code from the external device to the central server, thereby accessing the authentication code; providing an authentication code input to the smart lock server; comparing the authentication code input with the authentication code, and if the authentication code input is identical to the authentication code, unlocking the smart lock; sending an alarm disarm request for disarming an alarm system to an alarm server communicatively connected to the alarm system; disarming the alarm system; and sending a delivery confirmation to the central server.

## Description

### Technical field

The present invention relates to systems, devices and methods for enabling delivery of items procured through electronic communication to an alarm secured area.

### Background

The emergence of the internet and the rapid increase of users thereof has transformed shopping. Not only is a wider range of products accessible, but the act of browsing and purchasing items and services online often saves time, money and energy. However, the delivery of items to the end consumer is a proven logistical challenge. Thus, there exists a variety of solutions on the market, such as door delivery, delivery to a pick-up point or to a locked pick-up box. However, what present solutions have in common is that they do not adequately handle the last part of the delivery: providing the item to the home of the consumer in a safe and secure way. The main drawback is that they all require the participation of the consumer, which in the worst case scenario may result in that the consumer experience of online shopping being more time and energy consuming than conventional shopping.

In the prior art there exists some solutions to this issue. An example is WO0182253, wherein a system comprising a computer and an e-lock is disclosed. The computer is adapted to communicate entry criteria to the e-lock, such that the e-lock may be opened during delivery of goods or services.

However, with the rapid increase of the number of parties on the internet participating in online purchase and delivery and the increase in complexity of surveillance of private homes, there is a need for an improved system and method for enabling delivery.

### Summary of the invention

An object of the present inventive concept is therefore to overcome the above problems, and to provide a solution to at least some extent, improves the prior art. This, and other objects, which will become apparent in the following, is accomplished by means of vehicle emergency communication system defined in the accompanying claims.

According to a first aspect of the present invention, a method for enabling delivery in an alarm secured area is provided, the method comprising: sending an order request from a user device to a vendor server, the order request comprising user identification information; sending an order confirmation comprising the user identification information to a central server; identifying at least one smart lock communicatively connected with a smart lock server based on the user identification information; generating an authentication code based on the user identification information; sending a delivery request comprising an order identification code to an external device; providing the order identification code from the external device to the central server, thereby accessing the authentication code; providing an authentication code input to the smart lock server; comparing the authentication code input with the authentication code, and if the authentication code input is identical to the authentication code, unlocking the smart lock; sending an alarm disarm request for disarming an alarm system to an alarm server communicatively connected to the alarm system; disarming the alarm system; and sending a delivery confirmation to the central server.

Delivery is to be understood as providing an item or a service to a specific location. As such, delivery may be providing a physical object to the specific location, or providing a service to the specific location.

An alarm secured area may be any area, premise, building etc. that to any extent is alarmed. That an area is alarmed is to be understood that any type of alarm system is active within at least part of that area, and wherein movement, sound, vibrations, heat or any other parameter indicative of unauthorized activity within the area triggers the alarm system. An alarm secured area may therefore e.g. be a building having one or more alarm secured doors such that, when the one or more doors are open in an unauthorized way, an alarm is triggered. An alarm secured area may also e.g. be a private home in which one or more surveillance cameras are active.

Sending an order request from a user device to a vendor server may be performed in a variety of ways. Sending may be performed through another server, such as the central server

Sending an order confirmation comprising the user identification information to a central server may be performed from the user device to the central server. Sending an order confirmation from the user device to the central server may for example be performed at the same time, or substantially at the same time, as sending an item delivery request. Alternatively, sending an order confirmation may be performed from the vendor server to the central server. That any two actions are performed substantially at the same time is to be understood that they are performed within a short time interval such as one second, half a second or quarter of a second. Any two actions may be performed at the same time by being the result of the same prior action, such as pressing button.

Identifying at least one smart lock communicatively connected with a smart lock server based on the user identification information is preferably performed in the central server. The central server may as such comprise a database where user information is corresponding to smart lock information. For example, any given user corresponds to at least one smart lock. As such, user information is by the central server readily translatable to smart lock information, and a user identification is readily translatable to a smart lock identification identifying at least one smart lock.

By comprising sending a delivery request comprising an order identification code to an external device, which code the external device may subsequently use in order to gain access to the alarm secured area, a more adaptive method is provided. The external device may e.g. be a hand-held device, such as a smart phone, or a laptop computer. Hereby, the external device may be carried by a courier that is to deliver an item, such that the courier may access the authentication code for oepning the smart lock and disarming the alarm system when the courier is in the vicinity of the area to which the item is to be delivered. There may be a time window in which providing the order identification code from the external device is possible. In some embodiments, providing the order identification code from the external device to the central server is performed when the external device is arranged within a predetermined distance from the smart lock. Alternatively, providing the order identification code from the external device to the central server may be performed within a predetermined time interval and when the external device is arranged within a predetermined distance from the smart lock.

Furthermore, by comprising sending an alarm disarm request for disarming an alarm system to an alarm system, a more time efficient method and a more user friendly method is provided.

According to an exemplary embodiment, the method further comprises sending a delivery request comprising an order identification code to a freight server, and wherein sending a delivery request comprising an order identification code to an external device is performed from the freight server.

A freight server is to be understood as a server connected to or part of a system that coordinates freight of goods and/or services. A freight server may e.g. be a transport management system (TMS) or a warehouse management system (WMS). Alternatively, a freight server may be a server belonging to a specific freight company.

Thus, a freight server is a server adapted to, or connected to a system adapted to, coordinate freight of goods and/or services.

Hereby, a delivery request is provided to a server that may efficiently coordinate freight of the item or service that is to be delivered, instead of coordinating the freight from the central server. Thus, a more time efficient method is provided.

The delivery request to a freight server may be sent from the central server. Alternatively, the delivery request to a freight server may be sent from the vendor server.

According to an exemplary embodiment, generating an authentication code based on the user identification information comprises: sending an authentication code request based on the user identification information from the central server to the smart lock server communicatively connected to the smart lock; generating an authentication code based on the authentication code request by the smart lock server; and sending the authentication code from the smart lock server to the central server.

Hereby, generating an authentication code does not need to be carried out by any user of the user device, a vendor server, a freight server or any carrier of an external device. Thus, a more time efficient method is provided.

Alternatively, the authentication code may be generated in the central server.

According to an exemplary embodiment, sending an alarm disarm request for disarming an alarm system to an alarm server comprises sending the alarm disarm request from the smart lock server to the alarm server.

Hereby, the smart lock server directly communicates with the alarm server, such that the communication does not have to go through any other party. As such, a more time efficient and energy efficient method is provided.

According to an exemplary embodiment, the method further comprises sending an alarm disarm request verification comprising smart lock identification information from the alarm server to the central server, after sending the alarm disarm request to the alarm server; and verifying the alarm disarm request if the smart lock identification information matches with the smart lock identified during identifying at least one smart lock.

Hereby, the central server verifies the request for disarming the alarm system. Thus, a more robust and secure system is provided.

According to an exemplary embodiment, disarming the alarm system comprises comparing the authentication code input with the authentication code, such that the alarm system is disarmed if the authentication code input is identical to the authentication code.

Thus, the alarm system is disarmed the same way as the smart lock is opened. Hereby, a more time efficient and energy efficient method is provided. The alarm system may be disarmed at the same time as the smart lock is opened.

According to an exemplary embodiment, disarming the alarm system comprises selectively disarming the alarm system such that a portion of the alarm system is disarmed.

An area covered by the alarm is to be understood as an area in which movement, sound, vibrations, heat or any other parameter indicative of unauthorized activity triggers the alarm. As such, disarming a portion of the alarm system may entail that a portion of an area that the alarm system is covering is no longer covered by the alarm system. As such, movement, sound vibrations, heat or any other parameter indicative of unauthorized activity occuring within the disarmed portion of the area does not trigger the alarm. For example, a portion of the view of a security camera mounted at an entrance for monitoring the entrance may be disarmed such that a zone in which a courier may move or place a package is created.

According to a second aspect of the present invention, a system for enabling indoor delivery in an alarm secured area is provided, the system comprising: a vendor server; a user device adapted to send an order request to the vendor server, the order request comprising user identification information; a central server for receiving order confirmation comprising the user identification information and for identifying at least one smart lock communicatively connected with a smart lock server based on the user identification information, wherein the smart lock server is adapted to receive an authentication code input and to compare the authentication code input with an authentication code, and if the authentication code input is identical to the authentication code, unlocking the smart lock; an external device for receiving a delivery request comprising an order identification code; and an alarm system communicatively connected to an alarm server adapted to receive an alarm disarm request.

According to an exemplary embodiment, the system further comprises a freight server adapted to receive a delivery request comprising the order identification code.

According to an exemplary embodiment, the freight server is adapted to provide a delivery request comprising the order identification code to the external device.

According to an exemplary embodiment, the smart lock server is adapted to receive an authentication code request based on the user identification information from the central server, generate an authentication code based on the user identification information, and send the authentication code to the central server.

According to an exemplary embodiment, the smart lock server is adapted to send the alarm disarm request to the alarm server.

According to an exemplary embodiment, the alarm server is further adapted to send an alarm disarm request verification comprising smart lock identification information to the central server; and wherein the central server is adapted to verify the alarm disarm request if the smart lock identification information matches with the smart lock identified by the central server.

At least the same technical effects, benefits and alternative embodiments related to the first aspect of the present invention are applicable to the second aspect of the present invention. As such, at least any technical effects, benefits and alternative embodiments related to any exemplary embodiment of the first aspect are applicable to any corresponding embodiment of the second aspect.

### Brief description of the drawings

These and other embodiments of the present invention will now be described in more detail, with reference to the appended drawings showing exemplary embodiments of the present invention, wherein:
Fig. 1 is a flow diagram of the second aspect of the present invention.
Fig. 2 is a schematic illustration of the system according to the first aspect of the present invention.

### Detailed descpription

In the following detailed description, some embodiments of the present invention will be described. However, it is to be understood that features of the different embodiments are exchangeable between the embodiments and may be combined in different ways, unless anything is specifically indicated. Even though in the following description, numerous details are set forth to provide a more thorough understanding of the present invention, it will be apparent to one skilled in the art that the present invention may be practiced without these details. In other instances, well known constructions or functions are not described in detail, so as not to obscure the present invention.

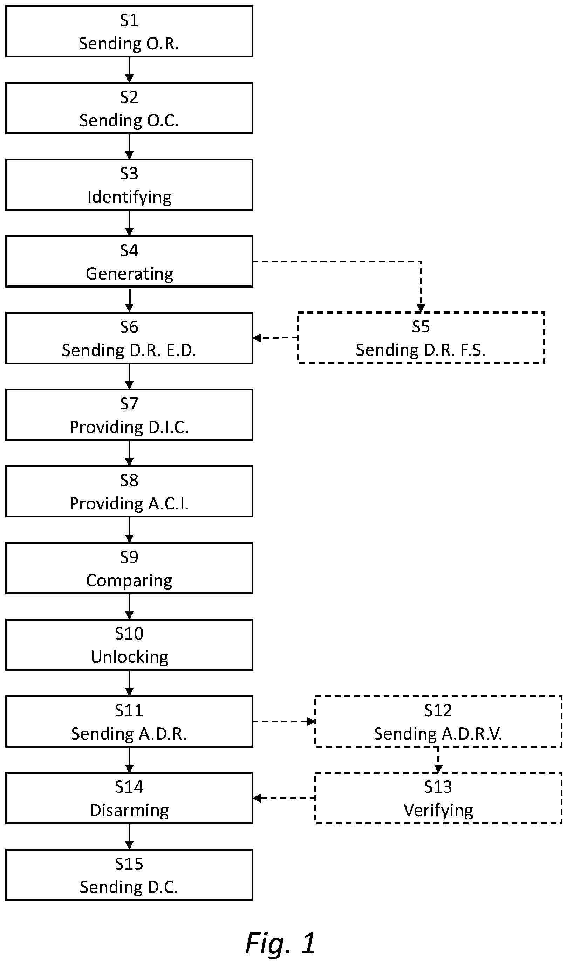

Fig. 1 is a flow diagram of a method according to the first aspect of the present invention. Sending an order request S1 from a user device 2 to a vendor server 3 is performed. The order request may be any request relating to ordering of an item or a service. The order request comprises user identification information that identifies a user registered to the central server 5. As such, the central server 5 may comprise a list of users. During sending an order confirmation S2 comprising the user identification information to a central server 5, the central server 5 receives the user identification information such that it may identify a user from the list of users corresponding to the order request sent from a user device 2 to the vendor server 3. The user identification information may e.g. be an e-mail address, a username, a home address, a password etc.

During identifying at least one smart lock S3 communicatively connected with a smart lock server 11 based on the user identification information, the user identification information is further used by the central server 5 in order to identify at least one smart lock 12 corresponding to the user identified by the user identification information. A smart lock 12 installed in the home of a user is e.g. identified. A smart lock may be any type of smart lock found on the market. A smart lock is therefore to be understood as a lock which is to some extent adapted for wireless communication, such that it may communicate in a wireless way with any type of external device such as a computer or a smart phone etc.

Any user registered in the central server 5 may correspond to any number of smart locks 12.

During generating an authentication code S4 based on the user identification information, a code that is used as an input for the smart lock 12 and in some embodiments for the alarm system 14 is produced. An authentication code may be any type of code. An authentication code may e.g. be a combination of numbers, a combination of letters, a combination of numbers and letters, a bar code, a QR-code, or any other type of virtual key. Since a code is generated based on the user identification information, the code may correspond to whatever number of smart locks associated with the user. Generating an authentication code S4 may be performed in the central server 5 or in the smart lock server 11. In some embodiments, generating an authentication code S4 comprises sending an authentication code request S41 based on the user identification information from the central server 5 to the smart lock server 11 communicatively connected to the smart lock 12. After sending an authentication code request S41, generating an authentication code S42 based on the authentication code request by the smart lock server 11 is performed. After generating an authentication code S42, sending the authentication code from the smart lock server 11 to the central server 5 is performed.

During sending a delivery request comprising an order identification code to an external device S6, a request for delivery of an item or service that was ordered by the order request is sent to an external device 7. The external device 7 may e.g. be a hand-held device, such as a smart phone, or a laptop computer.

The order identification code may be generated by the central server 5 based on the order confirmation. Alternatively, the order identification code may be generated by the vendor server 3 based on the order request.

Sending a delivery request comprising an order identification code to an external device S6 is in Fig. 1 shown to be performed after generating S4. However, the step S6 may be performed after the step S3. Alternatively, the step S6 may be performed after the step S2, such that the order identification code is generated by the vendor server 3 based the order request. Alternatively, the step S6 may be performed simultaneously as any one of the steps S2, S3 or S4.

In some embodiments, prior to sending a delivery request comprising an order identification code to an external device S6, sending a delivery request to a freight server S5 is performed, during which a delivery request is sent to a freight server 9. A freight server 9 may e.g. be a transport management system (TMS) or a warehouse management system (WMS). Alternatively, a freight server 9 may be a server belonging to a specific freight company.

During providing the order identification code S7 from the external device 7 to the central server 5, thereby accessing the authentication code, the identification code received by the external device 7 during step S6 is returned to the central server 5 such that the authentication code may be accessed by the external device 7. The authentication code may be accessible during a predetermined time interval, or when the external device 7 is arranged within a predetermined geographical area, such as within a specific radius of the smart lock 12.

After the authentication code is accessed by the external device 7, providing an authentication code input S8 to the smart lock server 11 is performed. An authentication code input to the smart lock server 11 may be any type of input, and may be inputted in a variety of ways. For example, an authentication code input may be a combination of numbers entered into a number pad of the smart lock 12 such that an authentication code input is provided to the smart lock server 11. Alternatively, a combination of numbers are entered into the external device and provided directly to the smart lock server 11 without any physical input into the smart lock 12. Alternatively, a bar code or a QR-code displayed on a screen of the external device 7 may be scanned by the smart lock 12 such that an authentication code input is provided to the smart lock server 11.

Providing an authentication code input S8 may only be performed during a predetermined time interval. Providing an authentication code input S8 may additionally and/or alternatively only be performed when the external device 7 is arranged within a predetermined geographical area, such as within a specific radius of the smart lock 12.

After an authentication code input has been provided to the smart lock server 11 during step S8, comparing the authentication code input S9 with the authentication code is performed. During comparing the authentication code input S9 with the authentication code, if the authentication code input is identical to the authentication code, the smart lock 12 is unlocked. Thus, unlocking S10 the smart lock 12 is performed.

After the smart lock 12 has been unlocked, sending an alarm disarm request S11 for disarming an alarm system 14 to an alarm server 13 communicatively connected to the alarm system 14 is performed. The alarm disarm request may be sent from the smart lock server 11. Alternatively, the alarm disarm request may be sent from the external device 7. Alternatively, the alarm disarm request may be sent from the central server 5.

A response to the alarm disarm request by the alarm server 13 is disarming S14 the alarm system 14. In some embodiments, disarming the alarm system comprises comparing S 141 the authentication code input with the authentication code, such that the alarm system 14 is disarmed if the authentication code input is identical to the authentication code. As such, disarming S14 the alarm system 14 may be performed simultaneously as unlocking S10 the smart lock. Disarming S14 may in some embodiments be performed simultaneously as unlocking S10 the smart lock such that disarming S14 is the result of the providing authentication code input S8.

In some embodiments, disarming S14 the alarm system 14 comprises selectively disarming the alarm system S142 such that a portion of the alarm system 14 is disarmed. That a portion of the alarm system 14 is disarmed may entail that a portion of an area coverd by the alarm system 14 is no longer covered by the alarm system 14. As such, movement, sound vibrations, heat or any other parameter indicative of unauthorized activity occuring within the disarmed portion of the area does not trigger the alarm system 14. For example, a portion of the view of a security camera (not shown) mounted at an entrance for monitoring the entrance may be disarmed such that a zone (not shown) in which a courier may move or place a package is created.

Before the step of disarming S14, sending an alarm disarm request verification S12 comprising smart lock identification information from the alarm server 13 to the central server 5 may be performed. The alarm disarm request verification serves as an extra security measure for verifying that disarming S14 is to be performed. Since the alarm disarm request verification comprises smart lock identification information, the central server may verify the alarm disarm request by correlating the smart lock identification information with the at least one smart lock 12 that was identified during identifying S3, i.e. the at least one smart lock 12 corresponding to the user indicated in the user identification information. Thus, verifying S13 the alarm disarm request if the smart lock identification information matches with the smart lock identified during identifying S3 at least one smart lock 12 is performed.

During sending a delivery confirmation S15 to the central server 5, a confirmation that delivery of an item or a service has been performed is sent to the central server 5. The delivery confirmation may e.g. be sent by the external device 7. Alternatively, the delivery confirmation is sent by the alarm server 13 or the smart lock server 11. Sending a delivery confirmation S15 to the central server 5 may e.g. be performed by the alarm server 13 or the smart lock server 11 due to that the end of a predetermined time interval has been reached. Hereby, the system 1 may register that the delivery has taken place such that the authentication code may be revoked, i.e. such that the authentication code no longer may be used for opening the smart lock. After a delivery confirmation has been sent to the central server 5, the central server 5 may send a delivery confirmation to the user device 2.

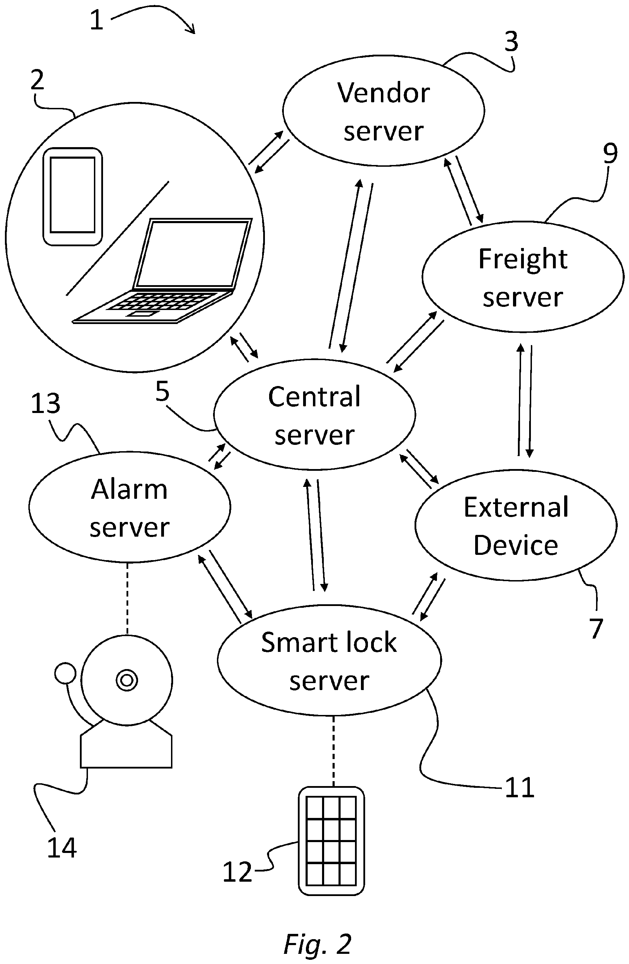

Fig. 2 is a schematic illustration of the system 1 according to the second aspect of the present invention adapted to perform the method according to the first aspect of the present invention. The system 1 comprises a user device 2 adapted to send an order request to a vendor server 3, the order request comprising user identification information. A user device 2 may be any type of device adapted for communicating with a server or using the internet etc., such as a personal computer or a smart phone. A vendor server 3 may be any type of server that facilitates procurement of items and/or services through the internet, such as an e-shop.

The system 1 further comprises a central server 5 for receiving an order confirmation comprising the user identification information. The user identification information may be used to identify a user registered to the central server 5. As such, the central server 5 may comprise a list of users. Thus, the central server 5 is adapted to use the user identification information to identify a user from the list of users corresponding to the order request sent from a user device 2 to the vendor server 3. The user identification information may e.g. be an e-mail address, a username, a home address, a password etc. The central server 5 is further adapted for identifying at least one smart lock 12 communicatively connected with a smart lock server 11 based on the user identification information, i.e. at least one smart lock 12 corresponding to the user identified by the user identification information. A smart lock 12 installed in the home of a user is e.g. identified. A smart lock 12 may be any type of smart lock found on the market. A smart lock 12 is therefore to be understood as a lock which is to some extent adapted for wireless communication, such that it may communicate in a wireless way with any type of external device such as a computer or a smart phone etc.

The smart lock server 11 is adapted to receive an authentication code input and to compare the authentication code input with an authentication code. The authentication code may have been generated by the central server 5 based on the user identification information. Alternatively, the authentication code may have been generated by the smart lock server 11. If the authentication code input is identical to the authentication code, the smart lock server 11 is adapted to unlock the smart lock 12.

The system 1 further comprises an external device 7 for receiving a delivery request comprising an order identification code. The delivery request further comprises information about what item and/or service is to be delivered, the address to which it is to be delivered, to the recipient etc. The external device 7 may receive the delivery request from the central server 5. Alternatively, the external device 7 may receive the delivery request directly from the vendor server 3 (not shown in Fig. 2). In some embodiments, as is shown in Fig. 2, the system 1 further comprises a freight server 9. A freight server 9 is to be understood as a server connected to or part of a system that coordinates freight of goods and/or services. A freight server 9 may e.g. be a transport management system (TMS) or a warehouse management system (WMS). Alternatively, a freight server may be a server belonging to a specific freight company. Here, the freight server 9 is communicativley connected with the vendor server 3, the central server 5 and the external device 7. Thus, the external device 7 may receive the delivery request from the freight server 9. The external device 7 my be a device used by a user that is also a user of the freight server 9, such as a courier of a specific freight company to which the freight server 9 belongs. As such, the external device 7 may be closely connected to the freight server 9.

The system 1 further comprises an alarm system 14 communicatively connected to an alarm server 13. The alarm server 13 is adapted to receive an alarm disarm request. The alarm server 13 may receive the alarm disarm request from the smart lock server 11. Alternatively, the alarms server 13 may receive the alarm disarm request from the central server 5. In some embodiments, the alarm server 13 is further adapted to send an alarm disarm request verification comprising smart lock identification information to the central server 5. In these embodiments, the central server 5 is adapted to verify the alarm disarm request if the smart lock identification information matches with the smart lock identified by the central server 5.

The central server 5 is further adapted to receive a delivery confirmation that delivery of an item or a service has been performed. The external device 7 may be adapted to send the delivery confirmation. Alternatively, the alarm server 13 or the smart lock server 11 is adapted to send the delivery confirmation. The alarm server 13 or the smart lock server 11 may e.g. be adapted to send a delivery confirmation to the central server 5 when the end of a predetermined time interval has been reached. The central server 5 may be adapted to send a delivery confirmation to the user device 2 after the central server 5 has received a delivery confirmation.

The person skilled in the art realizes that the present invention by no means is limited to the embodiments described above. The features of the described embodiments may be combined in different ways, and many modifications and variations are possible within the scope of the appended claims. In the claims, any reference signs placed between parentheses shall not be construed as limiting the claim. The word "comprising" does not exclude the presence of other elements or steps than those listed in the claim. The word "a" or "an" preceding an element does not exclude the presence of a plurality of such elements.

## Claims

1. A method for enabling delivery in an alarm secured area, the method comprising:
sending an order request from a user device to a vendor server, the order request comprising user identification information;
sending an order confirmation comprising the user identification information to a central server;
identifying at least one smart lock communicatively connected with a smart lock server based on the user identification information;
generating an authentication code based on the user identification information;
sending a delivery request comprising an order identification code to an external device;
providing the order identification code from the external device to the central server, thereby accessing the authentication code;
providing an authentication code input to the smart lock server;
comparing the authentication code input with the authentication code, and if the authentication code input is identical to the authentication code, unlocking the smart lock;
sending an alarm disarm request for disarming an alarm system to an alarm server communicatively connected to the alarm system;
disarming the alarm system; and
sending a delivery confirmation to the central server.

2. Method according to claim 1, further comprising sending a delivery request comprising an order identification code to a freight server, and wherein sending a delivery request comprising an order identification code to an external device is performed from the freight server.

3. Method according to any preceding claim, wherein generating an authentication code based on the user identification information comprises:
sending an authentication code request based on the user identification information from the central server to the smart lock server communicatively connected to the smart lock;
generating an authentication code based on the authentication code request by the smart lock server; and
sending the authentication code from the smart lock server to the central server.

4. Method according to any preceding claim, wherein sending an alarm disarm request for disarming an alarm system to an alarm server comprises sending the alarm disarm request from the smart lock server to the alarm server.

5. Method according to claim 4, further comprising sending an alarm disarm request verification comprising smart lock identification information from the alarm server to the central server, after sending the alarm disarm request to the alarm server; and
verifying the alarm disarm request if the smart lock identification information matches with the smart lock identified during identifying at least one smart lock.

6. Method according to any preceding claim, wherein disarming the alarm system comprises comparing the authentication code input with the authentication code, such that the alarm system is disarmed if the authentication code input is identical to the authentication code.

7. Method according to any preceding claim, wherein disarming the alarm system comprises selectively disarming the alarm system such that a portion of the alarm system is disarmed.

8. Method according to any preceding claim, wherein providing the order identification code from the external device to the central server is performed when the external device is arranged within a predetermined distance from the smart lock.

9. System for enabling delivery in an alarm secured area, the system comprising:
a vendor server;
a user device adapted to send an order request to the vendor server, the order request comprising user identification information;
a central server for receiving an order confirmation comprising the user identification information and for identifying at least one smart lock communicatively connected with a smart lock server based on the user identification information, wherein the smart lock server is adapted to receive an authentication code input and to compare the authentication code input with an authentication code, and if the authentication code input is identical to the authentication code, unlocking the smart lock;
an external device for receiving a delivery request comprising an order identification code; and
an alarm system communicatively connected to an alarm server adapted to receive an alarm disarm request.

10. The system according to claim 9, further comprising a freight server adapted to receive a delivery request comprising the order identification code.

11. The system according to claim 10, wherein the freight server is adapted to provide a delivery request comprising the order identification code to the external device.

12. The system according to any one of claims 9-11, wherein the smart lock server is adapted to receive an authentication code request based on the user identification information from the central server, generate an authentication code based on the user identification information, and send the authentication code to the central server.

13. The system according to any one of claims 9-12, wherein the smart lock server is adapted to send the alarm disarm request to the alarm server.

14. The system according to claim 13, wherein the alarm server is further adapted to send an alarm disarm request verification comprising smart lock identification information to the central server; and
wherein the central server is adapted to verify the alarm disarm request if the smart lock identification information matches with the smart lock identified by the central server.

15. The system according to any one of claims 9-14, wherein the alarm system is adapted to be selectively disarmed such that a portion of the alarm system is disarmed.
